# FASCICULE DE BREVET EUROPEEN

(11) **EP 2 026 509 B1**
(45) Date de publication et mention de la délivrance du brevet: **04.10.2017**
(21) Numéro de dépôt: 08162177.3
(22) Date de dépôt: 11.08.2008
(51) Int. Cl.: H04L 12/40

(54) **Unité de transport**
Transporteinheit
Transport unit

(30) Priorité: 14.08.2007 FR 0757071
(43) Date de publication de la demande: 18.02.2009
(73) Titulaire: ALSTOM Transport Technologies, 93400 Saint-Ouen (FR)
(72) Inventeur: Leignel, Christine, 17180, PERIGNY (FR); Thuery, Christian, 17000, LA ROCHELLE (FR); Gellon, Michel, 17137, MARSILLY (FR)
(74) Mandataire: Lavoix

(56) Documents cités:
- WO-A-98/43392
- HUBERT KIRRMANN: "THE IEC/IEEE TRAIN COMMUNICATION NETWORK" IEEE, 2001, pages 81-92, XP002471919 http://ieeexplore.ieee.org/iel5/40/19846/0 0918005.pdf?tp=&arnumber=918005&isnumber=1 9846
- MORENO J C ET AL: "Line Redundancy in MVB-TCN Devices: A Control Unit Design" ELECTROTECHNICAL CONFERENCE, 2006. MELECON 2006. IEEE MEDITERRANEAN BENALMADENA, SPAIN 16-19 MAY 2006, PISCATAWAY, NJ, USA,IEEE, 16 mai 2006 (2006-05-16), pages 789-794, XP010927870 ISBN: 1-4244-0087-2

## Description

La présente invention concerne une unité de transport du type comprenant au moins :
- au moins un véhicule de transport de passagers et au moins un véhicule de conduite attaché au véhicule de passagers et formant un ensemble autonome de véhicules muni d'un équipement de propulsion embarqué,
- un ensemble de réseaux supportant un trafic en temps réel, l'ensemble de réseaux comprenant un bus de train, une première et une deuxième passerelles, un premier et un deuxième bus de véhicule reliés chacun au bus de train par l'intermédiaire de la première et respectivement de la deuxième passerelles, un premier et un deuxième groupes d'équipements embarqués comportant des équipements connectés uniquement à la première et respectivement à la deuxième passerelles par l'intermédiaire du premier et respectivement du deuxième bus de véhicule.

Il est connu une unité de transport comportant deux à cinq véhicules de transport de passagers rattachés les uns aux autres, et deux véhicules de conduite attachés chacun à une extrémité de la chaîne de véhicules de transport de passagers. Cette unité de transport est munie d'un équipement de propulsion embarqué et forme un ensemble de véhicules autonome et inséparable d'un point de vue du fonctionnement aussi appelé unité insécable.

Une telle unité de transport peut soit fonctionner de manière indépendante, soit être attachée à d'autres unités de transport pour former un train.

Lorsque l'unité de transport fonctionne de manière indépendante, le véhicule de conduite d'une extrémité de l'unité de transport pilote l'unité de transport en fonction de la direction de roulage de l'unité de transport.

Lorsque plusieurs unités de transport sont assemblées pour former un train, seul le véhicule de conduite d'une extrémité du train pilote l'ensemble des unités de transport.

Les données relatives à la gestion du fonctionnement des équipements du train telles que les équipements d'alimentation, de freinage, de chauffage, sont transmises à un calculateur de pilotage du train situé dans le véhicule de conduite par l'intermédiaire d'un bus de train.

Toutefois, pour des architectures de trains comprenant un nombre important d'unités de transport, il existe un risque de surcharge de l'ensemble de réseaux.

L'invention a pour but de proposer une unité de transport comportant une architecture réseau dans laquelle le risque de surcharge réseau est limité.

A cet effet, l'invention a pour objet une unité de transport du type précité, caractérisée en ce que au moins deux véhicules comportent chacun au moins un équipement du premier groupe d'équipements et au moins un équipement du deuxième groupe d'équipements.

Suivant des modes particuliers de réalisation, l'unité de transport comporte l'une ou plusieurs des caractéristiques suivantes :
- le premier bus de véhicule et le premier groupe d'équipements ainsi que le deuxième bus de véhicule et le deuxième groupe d'équipements sont répartis dans tous les véhicules de ladite unité de transport,
- l'ensemble de réseaux comporte une troisième passerelle, un troisième bus de véhicule relié au bus de train par la troisième passerelle et un troisième groupe d'équipements comportant des équipements connectés uniquement au troisième bus de véhicule, et en ce que le troisième groupe d'équipements comprend uniquement des équipements propres à gérer la communication, l'affichage, la signalisation ferroviaire, le diagnostic et la commande de la conduite de l'unité de transport,
- les équipements appartenant à chaque groupe d'équipements contribuent à réaliser une fonction parmi les fonctions de confort, de propulsion/freinage et de commande de conduite de l'unité de transport,
- ledit premier groupe d'équipements comprend uniquement des équipements propres à gérer et à réaliser des activités liées au confort des passagers,
- ledit premier groupe d'équipements consiste en au moins un équipement parmi un calculateur maître, un équipement de contrôle des portes, un équipement d'éclairage, un équipement de sonorisation, un équipement de chauffage-climatisation, un équipement de diffusion d'informations aux passagers, un équipement de diagnostic du confort et une installation sanitaire,
- ledit deuxième groupe d'équipements comprend uniquement des équipements propres à gérer et à réaliser la propulsion et le freinage de l'unité de transport,
- ledit deuxième groupe d'équipements consiste en au moins un équipement parmi un calculateur maître, une unité électronique de contrôle d'un équipement de propulsion, une unité électronique de contrôle d'un onduleur auxiliair, une unité électronique de contrôle des équipements de distribution haute tension, une unité électronique de contrôle d'un chargeur batterie, une unité électronique de contrôle d'un dispositif de production d'air comprimé, une unité électronique de contrôle d'une unité de traction/freinage, une unité électronique de contrôle d'anti-enrayage, une unité électronique de contrôle d'une unité de détection et d'extinction d'incendie, une unité électronique de détection d'instabilité bogie et une unité électronique de détection boîte chaude,
- chaque groupe d'équipements comprend un calculateur maître du bus de véhicule auquel il est connecté, le calculateur maître étant apte à gérer et à commander les autres équipements du groupe d'équipements, chaque calculateur maître recevant des données des autres équipements et étant apte à transmettre au bus de train des données de synthèse représentatives du fonctionnement de tous les autres équipements du groupe d'équipements, lesdites données de synthèse étant codées sur un nombre prédéfini de bits quel que soit le nombre et le type d'équipements du groupe d'équipements, le nombre de données transmises par la calculateur maître étant inférieur au nombre de données reçues par le calculateur maître de la part des autres équipements,
- l'équipement maître du troisième groupe d'équipements est apte à gérer la conduite de l'unité de transport, et en ce que ledit équipement maître du troisième groupe d'équipements est propre à commander l'équipement maître du premier et/ou du deuxième groupes d'équipements,
- chaque passerelle du bus de train comprend au moins une table de configuration assurant la conversion du format des données de chaque bus de véhicule au bus de train et inversement, et en ce que le ou chaque équipement maître d'un groupe d'équipements comporte des moyens de réception d'un nouveau programme de calcul de sorte que lors de l'ajout ou du remplacement d'un équipement par un nouvel équipement dans ledit groupe d'équipements ou lors de l'implémentation d'une nouvelle loi de commande d'un équipement, le ou chaque équipement maître est apte à être reprogrammé sans modifier les tables de configuration de la passerelle auquel le nouvel équipement est connecté,
- le ou chaque équipement maître est apte à transmettre dans un canal de transmission périodique, uniquement des données de signalisation de l'existence et de la nature d'un défaut.

L'invention sera mieux comprise à la lecture de la description qui va suivre donnée uniquement à titre d'exemple et faite en se référant aux dessins, sur lesquels :
- la figure 1 est une vue schématique d'une unité de transport selon l'état de la technique ;
- la figure 2 est une vue schématique d'une unité de transport selon l'invention ; et
- la figure 3 est une vue schématique d'un train comportant plusieurs unités de transport selon l'invention.

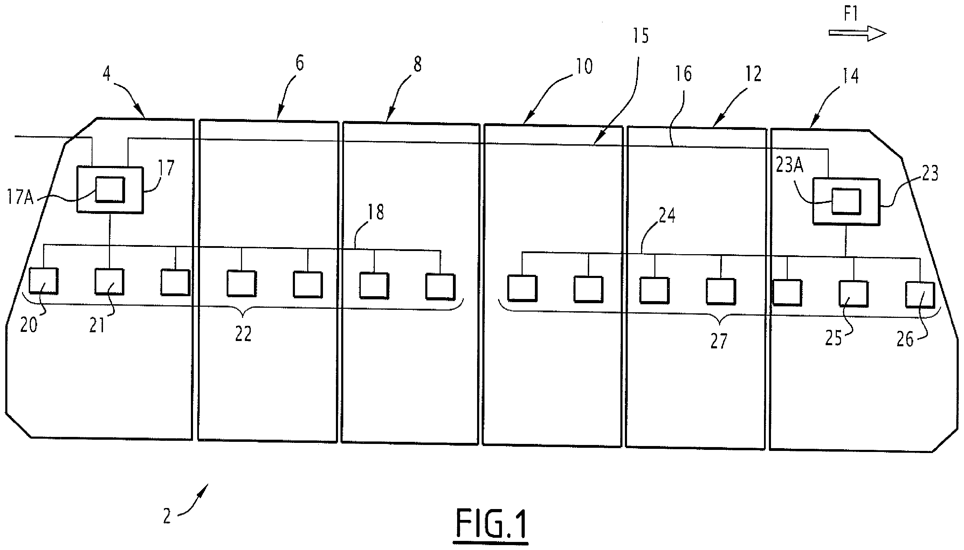

Une unité de transport 2 selon l'état de la technique est illustrée sur la figure 1. Celle-ci comporte un premier véhicule de conduite 4, quatre véhicules de transport de passagers 6, 8, 10, 12 ci-après dénommés véhicules passagers, attachés les uns aux autres, et un deuxième véhicule de conduite 14. Le premier 4 et le deuxième 14 véhicules de conduite sont agencés chacun à une extrémité de l'unité de transport 2.

Dans le mode de réalisation décrit, l'unité de transport 2 se dirige dans la direction F1 de sorte que le deuxième véhicule de conduite 14 est en tête de l'unité de transport et pilote celle-ci.

De telles unités de transport 2 sont aptes à être rattachées les unes aux autres pour former un train. Les véhicules de conduite de l'une ou l'autre des extrémités du train sont alors propres à piloter l'ensemble des unités de transport en fonction de la direction d'avancement du train.

L'unité de transport 2 comporte un ensemble de réseaux 15 supportant un trafic en temps réel. Cet ensemble de réseaux 15 est généralement constitué par un « réseau TCN » de l'anglais « Train Communication Network »

L'ensemble de réseaux 15 comprend un bus de train 16 (généralement constitué par un bus WTB de l'anglais « Wire Train Bus »), une première passerelle 17, un premier bus de véhicule 18 (généralement constitué par un bus MVB de l'anglais « Multifonction Vehicle Bus ») connecté au bus de train 16 par l'intermédiaire de la première passerelle 17, et des équipements 20, 21 reliés uniquement à la première passerelle 17 par l'intermédiaire du premier bus de véhicule 18. Ces équipements 20, 21 forment un premier ensemble d'équipements 22.

Le bus de train 16 est apte à transmettre des données de fonctionnement entre les équipements 20, 21 de l'ensemble d'équipements 22 et un calculateur de conduite 26, agencé dans le deuxième véhicule de conduite 14 qui pilote le train. Ce calculateur 26 est ci-après dénommé calculateur de conduite du train.

Les données de fonctionnement comprennent des données représentatives de commandes générées par le calculateur de conduite de train 26 et transmises à tous les équipements 20, 21 qui les exécutent. Les données de fonctionnement comprennent également des données représentatives de l'état de fonctionnement des équipements 20, 21 qui sont générées par les équipements 20, 21 et sont transmises au calculateur de conduite de train 26.

La passerelle 17 comprend une table de configuration 17A assurant la conversion du format des données de fonctionnement du premier bus de véhicule 18 au bus de train 16 et inversement.

La table de configuration 17A est programmée en fonction du nombre et du type des équipements 20, 21 de l'ensemble d'équipements 22 connectés à la première passerelle 17. La table de configuration est un des éléments présentés lors de l'homologation du train.

Lorsqu'un véhicule passagers 6 ou un équipement 21 est retiré ou ajouté d'une unité de transport 2, les tables de configuration 17A de l'ensemble des passerelles du train doivent être reconfigurées et homologuées par ce service d'homologation.

Les équipements 20, 21 du premier ensemble d'équipements 22 et le premier bus de véhicule 18 sont disposés et répartis uniquement dans le premier véhicule de conduite 4 et dans les deux véhicules passagers 6, 8 contigus et directement attachés au véhicule de conduite 4.

Les équipements 20, 21 du premier ensemble d'équipements 22 comprennent des équipements de type calculateurs et de type modules d'entrée/sortie déportés. Ces équipements 20, 21 sont aptes à recevoir des données représentatives de commandes du calculateur de conduite du train 26, et à lui transmettre en retour des données représentatives de leur état de fonctionnement via le bus de train 16.

En particulier, le premier ensemble d'équipements 22 comprend un calculateur maître 20 qui est l'arbitre du bus de véhicule 18 et qui est propre à gérer et à commander l'ensemble des autres équipements 21 de l'ensemble d'équipements 22, c'est-à-dire l'ensemble des équipements localisés dans le premier véhicule de conduite 4 et dans les deux véhicules passagers 6, 8 directement rattachés à celui-ci par le bus de véhicule 18.

Par ailleurs, le premier ensemble d'équipements 22 comporte des équipements 21 aptes à gérer toutes les fonctions liées au fonctionnement du train et en particulier des équipements propres à gérer la conduite de l'unité de transport 2, tel que par exemple des équipements de communication et d'affichage ; des équipements propres à gérer et à réaliser l'alimentation, la propulsion et le freinage de l'unité de transport 2, tel que par exemple une unité électronique de contrôle des équipements de distribution haute tension ou d'un onduleur auxiliaire ; et des équipements propres à gérer et à réaliser des activités liées au confort des passagers, tel que par exemple un équipement de contrôle des portes et un équipement d'éclairage.

L'ensemble de réseaux 15 comprend en outre une deuxième passerelle 23, un deuxième bus de véhicule 24 connecté au bus de train 16 par l'intermédiaire de la deuxième passerelle 23, et des équipements 25, 26 reliés uniquement à la deuxième passerelle 23 par l'intermédiaire du deuxième bus de véhicule 24. Les équipements 25, 26 forment un deuxième ensemble d'équipements 27.

La deuxième passerelle 23 comporte une table de configuration 23A.

Le deuxième bus de véhicule 24 et les équipements 25, 26 du deuxième ensemble d'équipements 27 sont disposés et répartis uniquement dans le deuxième véhicule de conduite 14 et dans les deux véhicules passagers 10, 12 contigus et directement attachés au deuxième véhicule de conduite 14.

La deuxième passerelle 23, le deuxième bus de véhicule 24, les équipements 25, 26 du deuxième ensemble d'équipements 27 (c'est-à-dire les équipements reliés au bus du véhicule 24) sont identiques à la première passerelle 17, au premier bus de véhicule 18 et respectivement aux équipements 20, 21 du premier ensemble d'équipements 22, et ne seront pas décrits en détail.

En fonctionnement, le calculateur maître 20 du premier ensemble d'équipements 22 reçoit des données des équipements 21 du premier ensemble d'équipements 22. Il transmet certaines de ces données à la passerelle 17. La passerelle 17 reconfigure les données à l'aide de la table de reconfiguration 17A, puis les transmet au calculateur de conduite du train 26 via le bus de train 16.

Lorsqu'un équipement 21 du premier ensemble d'équipements 22 est défectueux, les données transmises au bus de train 16 comprennent les données nécessaires au deuxième ensemble d'équipements 27 pour réaliser la fonction défectueuse dans un mode dégradé. Ces données comprennent notamment l'identification de l'équipement défectueux ainsi que la nature du défaut de cet équipement.

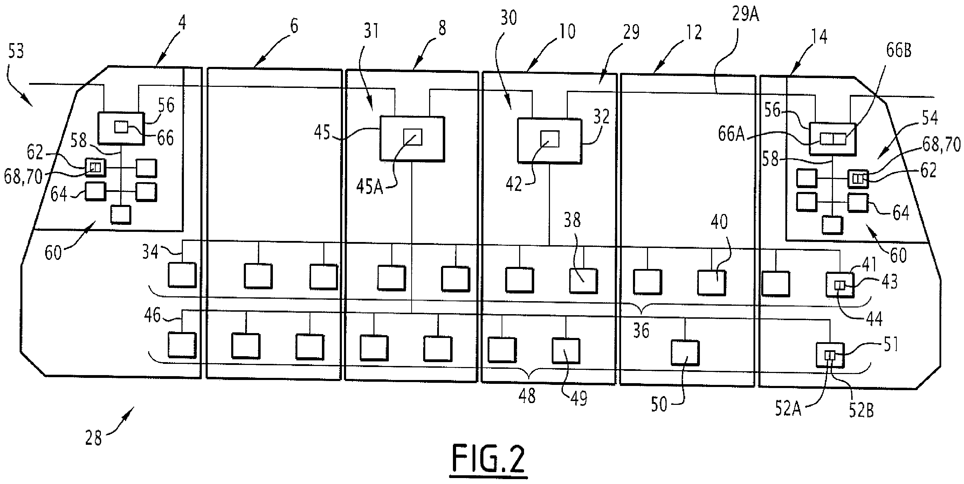

L'unité de transport 28 selon l'invention est illustrée schématiquement sur la figure 2. Les éléments identiques aux éléments de l'unité de transport illustrée sur la figure 1 ont été désignés par les mêmes références et ne seront pas décrits une seconde fois.

L'unité de transport 28 comprend un ensemble de réseaux 29 comprenant un bus de train 29A, et un ensemble de confort 30 et un ensemble de propulsion/freinage 31.

L'ensemble de confort 30 comprend une première passerelle 32, un premier bus de véhicule 34 relié au bus de train 29A par l'intermédiaire de la première passerelle 32 et un premier groupe d'équipements 36 dont les équipements 38, 40, 41 sont tous reliés à la première passerelle 32, par l'intermédiaire du premier bus de véhicule 34.

La première passerelle 32 comprend une table de configuration 42 assurant la conversion du format des données de fonctionnement des équipements lors du passage de celles-ci du premier bus de véhicule 34 au bus de train 29A.

La table de configuration 42 définie l'interface de l'ensemble de confort 30 avec le reste du train. Cette table identifie les types d'équipements présents dans l'ensemble et les données de contrôle de niveau de train de ces types d'équipements.

La table de configuration 42 ne comporte pas de données de conversion relatives aux identifications des équipements 38, 40 du premier groupe de sorte qu'il n'est pas nécessaire de reconfigurer cette table 42 lorsqu'un équipement 38 du premier groupe est remplacé, rajouté ou enlevé, comme explicité ultérieurement dans la description.

Les équipements 38, 40, 41 du premier groupe d'équipements 36 sont disposés et répartis dans au moins deux véhicules de l'unité de transport 28.

Dans le mode de réalisation de l'invention illustré sur la figure 2, les équipements 38, 40, 41 du premier groupe d'équipements sont agencés dans l'ensemble des véhicules de l'unité de transport 28, c'est-à-dire dans les deux véhicules de conduite 4, 14 et dans les quatre véhicules passagers 6, 8, 10, 12.

Selon l'invention, un groupe d'équipements est un groupe fonctionnel d'équipements. Les équipements de ce groupe sont propres à réaliser une fonction parmi les fonctions principales d'un train, à savoir le confort, la propulsion/freinage (ou autrement dit la conversion d'énergie en effort pour l'alimentation, la propulsion et le freinage) et la commande de la conduite de l'unité de transport.

Autrement dit, les équipements du groupe selon l'invention contribuent à un même type de réalisation.

Le premier groupe d'équipements 36 comprend uniquement des équipements 38, 40 d'un type propre à gérer et à réaliser des activités liées au confort des passagers.

En particulier, le premier groupe d'équipements 36 consiste en au moins un équipement 38, 40 parmi un ensemble comprenant un calculateur maître 41, un équipement de contrôle des portes, un équipement d'éclairage, un équipement de sonorisation, un équipement de chauffage-climatisation, un équipement de diffusion d'informations aux passagers, un équipement de diagnostic du confort et une installation sanitaire.

Le premier groupe d'équipements 36 comprend un ou plusieurs des équipements mentionnés ci-dessus mais uniquement des équipements de ce type et ne comprend nullement des équipements d'un autre type, tel que par exemple des équipements propres à gérer d'autres activités comme la commande de conduite ou la propulsion/freinage de l'unité de transport.

Le calculateur maître 41 est l'arbitre de bus du bus de véhicule 34.

Le calculateur maître 41 comprend un processeur adapté pour exécuter un programme d'ordinateur 43 qui synthétise les données de fonctionnement des équipements 38, 40 du premier groupe 36 pour transmettre à la première passerelle 32 uniquement des données représentatives du fonctionnement de tous les équipements du premier groupe 36 nécessaires à la conduite du train.

Le programme 43 est apte à coder les données de synthèse sur un nombre prédéfini de bits quel que soit le nombre d'équipements du premier groupe d'équipements 36. Le nombre de données transmises par le calculateur maître 41 à la première passerelle 32 est inférieur au nombre de données reçues par celui-ci de la part des autres équipements 38, 40 du premier groupe.

Le programme 43 est adapté pour coder les données de synthèse de manière à ce qu'elles ne comprennent pas l'identification des équipements 38, 40 concernés par ces données. Par exemple, lorsqu'un équipement 38 du premier groupe est défectueux, la donnée de synthèse transmise à la première passerelle 32 comprend uniquement une donnée de signalisation de l'existence d'un défaut et de la nature de ce défaut et non l'identification de l'équipement défectueux.

Ainsi, les données de synthèse sont codées sur un nombre prédéfini de bits quel que soit le nombre et le type d'équipements du premier groupe d'équipements 36. Lorsqu'un équipement du premier groupe d'équipements est défectueux, le premier groupe d'équipements 36 est vu dans un premier temps, comme un unique équipement pour le calculateur de conduite du train 62.

Le calculateur de conduite du train 62 avertit le conducteur de l'existence d'une anomalie. Cette anomalie est caractérisée uniquement par sa nature. Le conducteur prend alors les dispositions de conduite réglementaires correspondantes à ce cas. A cet effet, dans un second temps, le conducteur cherche à identifier l'équipement défectueux afin de mettre en oeuvre les actions correctives pour reprendre le service dans les conditions optimales. Cette action déclenchera un dialogue sous forme d'échange de messages relatif au contexte entre le calculateur de conduite du train et le calculateur maître 41.

En conséquence, le nombre de données transitant de manière périodique par le bus de train 29A des unités de transport selon l'invention est inférieur au nombre de données transitant par le bus de train dans les unités de transport de l'état de la technique illustrées sur la figure 1. Les données de détail nécessaires au diagnostic précis des événements ne sont plus fournies de manière systématique mais uniquement lorsque cela est nécessaire. Ceci permet d'optimiser le taux de transfert de données.

Le calculateur maître 41 comporte en outre des moyens de réception 44 d'un nouveau programme de calcul. Ce nouveau programme est propre à modifier le programme 43 pour tenir compte de l'ajout ou du remplacement d'un équipement dans le premier groupe d'équipements 36.

L'ensemble de propulsion/freinage 31 comprend une deuxième passerelle 45, un deuxième bus de véhicule 46 relié au bus de train 29A par la deuxième passerelle 45 et un deuxième groupe d'équipements 48 comprenant des équipements 49, 50, 51 reliés à la deuxième passerelle 45 par l'intermédiaire du deuxième bus de véhicule 46.

La deuxième passerelle 45 comporte une table de configuration 45A dont le fonctionnement est similaire à la table de configuration 42.

Les équipements 49, 50, 51 du deuxième groupe d'équipements 48 sont disposés et répartis dans au moins deux véhicules de l'unité de transport 28. Dans le mode de réalisation de l'invention illustré sur la figure 2, les équipements 49, 50, 51 du deuxième groupe d'équipements 48 sont agencés dans l'ensemble des véhicules de l'unité de transport 28.

Le deuxième groupe d'équipements 48 comprend uniquement des équipements 49, 50, 51 d'un type propre à gérer et à réaliser l'alimentation, la propulsion et le freinage de l'unité de transport 28.

En particulier, le deuxième groupe d'équipements 48 consiste en au moins un équipement parmi un calculateur maître 51, une unité électronique de contrôle d'un équipement de propulsion 50,une unité électronique de contrôle des équipements de distribution haute tension, une unité électronique de contrôle d'un onduleur auxiliaire, une unité électronique de contrôle d'un chargeur de batterie, une unité électronique de contrôle d'un dispositif de production d'air comprimé, une unité électronique de contrôle d'une unité de traction/freinage, une unité électronique de contrôle d'anti-enrayage, une unité électronique de contrôle d'une unité de détection et d'extinction d'incendie, une unité électronique de détection d'instabilité bogie et une unité électronique de détection boîte chaude.

Le deuxième groupe d'équipements 48 comprend un ou plusieurs de ces équipements mais uniquement des équipements de ce type et ne comprend nullement des équipements d'un autre type, tel que par exemple des équipements propres à gérer d'autres activités comme le confort des passagers.

Le calculateur maître 51 est l'arbitre de bus du deuxième bus de véhicule 46. Il est donc propre à gérer les autres équipements du deuxième groupe 48.

Le calculateur maître 51 comprend un processeur apte à exécuter un programme 52A et des moyens de réception 52B d'un nouveau programme de calcul. Le programme 52A et les moyens de réception 52B sont similaires dans leur fonction au programme 43 et aux moyens de réception 44 de l'ensemble de confort et ne seront pas décrits à nouveau.

L'ensemble de réseaux 29 comprend également un premier 53 et un second 54 ensembles de conduite.

Le premier 53 et le second 54 ensemble de conduite sont chacun disposés et répartis uniquement dans le premier 4 et respectivement le deuxième 14 véhicules de conduite.

Le premier ensemble de conduite 53 comprend une troisième passerelle 56, un troisième bus de véhicule 58 relié au bus de train 29A par l'intermédiaire de la troisième passerelle 56, et un troisième groupe d'équipements 60 qui comporte des équipements 62, 64 reliés à la troisième passerelle 56 par l'intermédiaire du troisième bus de véhicule 58.

La troisième passerelle 56 comprend une table de configuration 66A similaire aux tables de configuration 32 et 45 et une table de configuration 66B. La table de configuration 66A est utilisée lorsque le calculateur de conduite 62 agencé dans le deuxième véhicule de conduite 14 ne pilote pas le train.

La table de configuration 66B est utilisée lorsque le calculateur de conduite 62 agencé dans le deuxième véhicule de conduite 14 pilote le train.

La table de configuration 66B est apte à récupérer les données des première 32 et de la deuxième 45 passerelles pour les fournir au bus de véhicule 58. Elle est en outre propre à transformer le format des données provenant du bus de véhicule 58 au format du bus de train 29A.

Les équipements 62, 64 du troisième groupe d'équipements 60 incluent uniquement des équipements propres à gérer la communication, l'affichage, la signalisation ferroviaire, le diagnostic et la commande de la conduite de l'unité de transport 28, lorsque ces équipements sont situés dans le véhicule de conduite en tête de l'unité de transport 28 ou du train.

En particulier, le troisième groupe d'équipements 60 comprend un calculateur maître 62 qui est l'arbitre de bus du premier bus de véhicule 58. Le calculateur maître 62 est donc propre à gérer les équipements 64 du troisième groupe d'équipements 60.

Le calculateur maître 62 comprend un processeur propre à exécuter un programme 68 et des moyens de réception 70 d'un nouveau programme de calcul. Le programme 68 et les moyens de réception 70 sont similaires dans leur fonction au programme 43, 52A et aux moyens de réception 44, 52B de l'ensemble de confort et de l'ensemble de propulsion/freinage et ne seront pas décrits à nouveau.

Lorsque le calculateur maître 62 est le calculateur de conduite du train, il est également propre à gérer les calculateurs maîtres 41 et 51 des premiers 36 et des deuxièmes 48 groupes d'équipements des unités de transport 28. Dans ce cas, le calculateur maître 62 est apte à transmettre des données représentatives de commande aux calculateurs maîtres 41 et 51, à recevoir des données représentatives du fonctionnement des équipements de ceux-ci, et à transmettre ces données représentatives de fonctionnement aux équipements de communication, d'affichage ou aux autres équipements du troisième groupe 60 en fonction de la nature de ces données.

Lorsque le véhicule de conduite 14 contenant le premier ensemble de conduite 53 est situé entre un véhicule passagers et un véhicule de conduite d'une autre unité de transport, le premier ensemble de conduite 53 ne réalise pas les fonctions liées à la conduite du train.

Les éléments du deuxième ensemble de conduite 54 sont identiques aux éléments du premier ensemble de conduite 53, ont été désignés par les mêmes références et ne seront pas décrits à nouveau.

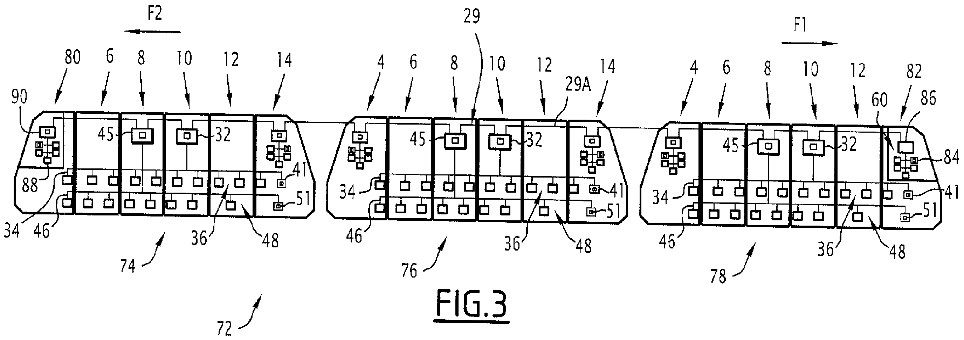

Un train 72 selon l'invention est illustré sur la figure 3. Ce train 72 comporte trois unités de transport 74, 76, 78. Ces unités de transport 74, 76, 78 sont identiques à l'unité de transport 28 illustrée sur la figure 2.

Sur la figure 3, les véhicules de conduite 80 et 82 sont agencés à chaque extrémité du train 72.

Lorsque le train 72 se dirige dans la direction F1, le calculateur maître 84 situé dans le véhicule de conduite 82 à l'extrémité du train 72 est le calculateur maître de conduite et la passerelle 86 à laquelle il est connecté est appelée ci-après passerelle menante.

Lorsque le train 72 se dirige dans la direction opposée F2, le calculateur maître 88 situé dans le véhicule de conduite 80 à l'autre extrémité du train 72 est le calculateur maître de conduite et la passerelle 90 à laquelle il est relié est la passerelle menante 90.

Dans le mode de réalisation décrit, le train 72 se dirige dans la direction F1.

Le calculateur maître de conduite 82 transmet un ensemble de données de commande et de requête à la passerelle menante 86. La passerelle menante 86 configure ces données et les transmet au bus de train 29A dans un canal de transmission périodique.

Les premiers 32 et deuxièmes 45 passerelles de chaque unité de transport 74, 76, 78 sélectionnent, dans cet ensemble de données, les données qui leur sont spécifiques et les transmettent aux calculateurs maîtres 41, 51 des premiers 34 et deuxièmes 46 bus de véhicule de chaque unité de transport.

En particulier, les deuxièmes passerelles 45 de chaque unité de transport sélectionnent les données spécifiques au confort des passagers et les transmettent aux calculateurs maîtres 41. Les calculateurs maîtres 41 traitent les données et transmettent les données traitées aux équipements des premiers groupes d'équipements 36 via les premiers bus de véhicule 34. Chaque équipement 38, 40 des premiers groupes d'équipements 36 reconnaît sur les premiers bus de véhicule, les données qui le concernent et exécute les commandes contenues dans ces données.

Chaque équipement 38, 40 des premiers groupes d'équipements 36 transmet au calculateur maître 41 de son groupe périodiquement ou apériodiquement des données d'état de fonctionnement.

Les calculateurs maîtres 41 traitent ces données, produisent une vision synthétique de l'ensemble des données reçues des équipements 38, 40 des premiers groupes d'équipements 36, et transmettent aux premières passerelles 32 uniquement ces données de synthèse.

Ces données de synthèse comprennent uniquement des données de signalisation de l'existence et de la nature d'un défaut. Autrement dit, ces données de synthèse ne contiennent pas d'informations relatives à la référence de l'équipement concerné.

Sur réception des données des calculateurs maîtres 41, les premières passerelles 32 reconfigurent les données reçues et les transmettent au bus de train 29A à destination de la passerelle menante.

La passerelle menante 86 reconfigure les données transmises sur le bus de train 29A et les transmet au calculateur maître de conduite 84. Ce dernier met en forme ces données et les transmet aux équipements de conduite 60 concernés par celles-ci.

Ainsi, les données traversant le bus de train 29A sont uniquement des données de synthèse de sorte que celui-ci est moins chargé.

Le calculateur maître de conduite 84 gère les calculateurs maîtres 41, 51 des premier 34 et deuxième 46 bus de véhicule.

Lorsqu'un équipement de l'ensemble de réseaux 29 doit être échangé ou ajouté, par exemple un équipement connecté au premier bus de véhicule 34 de l'unité de transport 74, un nouveau programme de calcul est introduit dans les moyens de réception 44 du calculateur maître 41 afin de modifier le programme 43 du calculateur maître 41, pour tenir compte du nouvel équipement ou d'une nouvelle loi de commande c'est-à-dire d'un nouveau logiciel de contrôle des équipements.

Si l'équipement fait partie d'un type d'équipement déjà présent et si ses données de contrôle de niveau train sont identiques, alors les données de synthèse générées après reprogrammation du programme 43 par le calculateur maître 41 sont identiques à celles générées par le calculateur maître 41 lorsque ce nouvel équipement n'était pas présent.

Ainsi, il n'est pas nécessaire de reconfigurer les tables de reconfiguration 42 des premières passerelles 32 de toutes les unités de transport 74, 76, 78 lors de l'ajout d'un nouvel équipement ou d'une nouvelle loi de commande. Les données de synthèse générées par l'équipement maître 41 sont de même type que les données de synthèse générées lorsque ce nouvel équipement n'était pas relié au premier bus de véhicule 34.

En variante, le train 72 comprend un nombre différent d'unités de transport.

En variante, les véhicules de conduite 4, 14 comportent un compartiment passagers et une cabine de conduite.

En variante, l'ensemble de réseaux 29 comporte un nombre différent de groupes d'équipements.

En variante, d'autres types que les types ensemble de confort, ensemble de propulsion/freinage et ensembles de conduite peuvent équiper une unité de transport.

Préférentiellement, l'unité de transport est utilisée dans des trains à grande vitesse, c'est-à-dire des trains atteignant des vitesses supérieures à 250 km/h.

Avantageusement, la transmission des données est plus rapide dans une unité de transport selon l'invention.

Avantageusement, l'unité de transport est un train ou un tramway.

## Revendications

1. Unité de transport (28, 74, 76, 78) comprenant :
- au moins un véhicule de transport de passagers (6, 8, 10, 12) et au moins un véhicule de conduite (4, 14, 80, 82) attaché au véhicule de passagers (6, 8, 10, 12) et formant un ensemble autonome de véhicules muni d'un équipement de propulsion embarqué (50),
- un ensemble de réseaux (29) supportant un trafic en temps réel, l'ensemble de réseaux (29) comprenant un bus de train (29A), une première (32) et une deuxième (45) passerelles, un premier (34) et un deuxième (46) bus de véhicule reliés chacun au bus de train (29A) par l'intermédiaire de la première (32) et respectivement de la deuxième (45) passerelles, un premier (36) et un deuxième (48) groupes d'équipements embarqués comportant des équipements (38, 40, 41 ; 49, 50, 51) connectés uniquement à la première (32) et respectivement à la deuxième (45) passerelles par l'intermédiaire du premier (34) et respectivement du deuxième (46) bus de véhicule,
**caractérisée en ce que** au moins deux véhicules (4, 6, 8, 10, 12, 14, 80, 82) comportent chacun au moins un équipement (38, 40, 41) du premier groupe d'équipements (36) et au moins un équipement (49, 50, 51) du deuxième groupe d'équipements (48).

2. Unité de transport (28, 74, 76, 78) selon la revendication 1, **caractérisée en ce que** le premier bus de véhicule (34) et le premier groupe d'équipements (36) ainsi que le deuxième bus de véhicule (46) et le deuxième groupe d'équipements (48) sont répartis dans tous les véhicules (4, 6, 8, 10, 12, 14, 80, 82) de ladite unité de transport (28, 74, 76, 78).

3. Unité de transport (28, 74, 76, 78) selon l'une quelconque des revendications 1 et 2, **caractérisée en ce que** l'ensemble de réseaux (29) comporte une troisième passerelle (56), un troisième bus de véhicule (58) relié au bus de train (29A) par la troisième passerelle (56) et un troisième groupe d'équipements (60) comportant des équipements (62, 64) connectés uniquement au troisième bus de véhicule (58), et **en ce que** le troisième groupe d'équipements (60) comprend uniquement des équipements (62, 64) propres à gérer la communication, l'affichage, la signalisation ferroviaire, le diagnostic et la commande de la conduite de l'unité de transport (28, 74, 76, 78).

4. Unité de transport (28, 74, 76, 78) selon l'une quelconque des revendications 1 à 3, **caractérisée en ce que** les équipements appartenant à chaque groupe d'équipements contribuent à réaliser une fonction parmi les fonctions de confort, de propulsion/freinage et de commande de conduite de l'unité de transport (28, 74, 76, 78).

5. Unité de transport (28, 74, 76, 78) selon l'une quelconque des revendications 1 à 4, **caractérisée en ce que** ledit premier groupe d'équipements (36) comprend uniquement des équipements (38, 40, 41) propres à gérer et à réaliser des activités liées au confort des passagers.

6. Unité de transport (28, 74, 76, 78) selon l'une quelconque des revendications 1 à 5 , **caractérisée en ce que** ledit premier groupe d'équipements (36) consiste en au moins un équipement parmi un calculateur maître (41), un équipement de contrôle des portes (40), un équipement d'éclairage (38), un équipement de sonorisation, un équipement de chauffage-climatisation, un équipement de diffusion d'informations aux passagers, un équipement de diagnostic du confort et une installation sanitaire.

7. Unité de transport (28, 74, 76, 78) selon l'une quelconque des revendications 1 à 6, **caractérisée en ce que** ledit deuxième groupe d'équipements (48) comprend uniquement des équipements (49, 50, 51) propres à gérer et à réaliser la propulsion et le freinage de l'unité de transport.

8. Unité de transport (28, 74, 76, 78) selon l'une quelconque des revendications 1 à 7, **caractérisée en ce que** ledit deuxième groupe d'équipements (48) consiste en au moins un équipement parmi un calculateur maître (51), une unité électronique de contrôle d'un équipement de propulsion (50), une unité électronique de contrôle d'un onduleur auxiliaire (49), une unité électronique de contrôle des équipements de distribution haute tension, une unité électronique de contrôle d'un chargeur batterie, une unité électronique de contrôle d'un dispositif de production d'air comprimé, une unité électronique de contrôle d'une unité de traction/freinage, une unité électronique de contrôle d'anti-enrayage, une unité électronique de contrôle d'une unité de détection et d'extinction d'incendie, une unité électronique de détection d'instabilité bogie et une unité électronique de détection boîte chaude.

9. Unité de transport (28, 74, 76, 78) selon l'une quelconque des revendications 1 à 6, **caractérisée en ce que** chaque groupe d'équipements (36, 48, 60) comprend un calculateur maître (41, 51, 62) du bus de véhicule (34, 46, 58) auquel il est connecté, le calculateur maître (41, 51, 62) étant apte à gérer et à commander les autres équipements (38, 40, 49, 50, 64) du groupe d'équipements (36, 48, 60), chaque calculateur maître (41, 51, 62) recevant des données des autres équipements (38, 40, 49, 50, 64) et étant apte à transmettre au bus de train (29A) des données de synthèse représentatives du fonctionnement de tous les autres équipements (38, 40, 49, 50, 64) du groupe d'équipements (36, 48, 60), lesdites données de synthèse étant codées sur un nombre prédéfini de bits quel que soit le nombre et le type d'équipements (38, 40, 49, 50, 64) du groupe d'équipements (36, 48, 60), le nombre de données transmises par la calculateur maître (41, 51, 62) étant inférieur au nombre de données reçues par le calculateur maître (41, 51, 62) de la part des autres équipements (38, 40, 49, 50, 64).

10. Unité de transport (28, 74, 76, 78) selon la revendication 4 combinée à la revendication 9, **caractérisée en ce que** l'équipement maître (62) du troisième groupe d'équipements (60) est apte à gérer la conduite de l'unité de transport (28, 74, 76, 78), et **en ce que** ledit équipement maître (62) du troisième groupe d'équipements (60) est propre à commander l'équipement maître (41, 51) du premier (36) et/ou du deuxième (48) groupes d'équipements.

11. Unité de transport (28, 74, 76, 78) selon l'une quelconque des revendications 9 et 10, **caractérisée en ce que** chaque passerelle (32, 45, 56) du bus de train (29A) comprend au moins une table de configuration (42, 45A, 66A, 66B) assurant la conversion du format des données de chaque bus de véhicule (34, 46, 58) au bus de train (29A) et inversement, et **en ce que** le ou chaque équipement maître (41, 51, 62) d'un groupe d'équipements (36, 48, 60) comporte des moyens de réception (44, 52B, 70) d'un nouveau programme de calcul de sorte que lors de l'ajout ou du remplacement d'un équipement (38, 40, 49, 50, 62, 64) par un nouvel équipement dans ledit groupe d'équipements (36, 48, 60) ou lors de l'implémentation d'une nouvelle loi de commande d'un équipement, le ou chaque équipement maître (41, 51, 62) est apte à être reprogrammé sans modifier les tables de configuration (42, 45A, 66A, 66B) de la passerelle (32, 45, 56) auquel le nouvel équipement est connecté.

12. Unité de transport (28, 74, 76, 78) selon l'une quelconque des revendications 9 à 11, **caractérisée en ce que** le ou chaque équipement maître (41, 51, 62) est apte à transmettre dans un canal de transmission périodique, uniquement des données de signalisation de l'existence et de la nature d'un défaut.

## Patentansprüche

1. Transporteinheit (28, 74, 76, 78) aufweisend:
- mindestens ein Passagiertransportfahrzeug (6, 8, 10, 12) und mindestens ein Führungsfahrzeug (4, 14, 80, 82), das an dem Passagierfahrzeug (6, 8, 10, 12) befestigt ist, eine autonome Anordnung von Fahrzeugen, ausgestattet mit einer Antriebsvorrichtung an Bord (50), bildend,
- eine Netzwerkanordnung (29), die einen Echtzeitverkehr unterstützt, wobei die Netzwerkanordnung (29) einen Zug-Bus (29A), ein erstes (32) und ein zweites (45) Gateway, einen ersten (34) und einen zweiten (46) Fahrzeugbus, die beide mit dem Zug-Bus (29A) über das erste (32) bzw. das zweite (45) Gateway verbunden sind, eine erste (36) und eine zweite (48) Gruppe von Vorrichtungen an Bord, die Vorrichtungen (38, 40, 41; 49, 50, 51) aufweisen, die nur mit dem ersten (32) bzw. mit dem zweiten (45) Gateway über den ersten (34) bzw. über den zweiten (46) Fahrzeugbus verbunden sind, aufweist,
dadurch charakterisiert, dass mindestens zwei Fahrzeuge (4, 6, 8, 10, 12, 14, 80, 82) jeweils mindestens eine Vorrichtung (38, 40, 41) der ersten Vorrichtungsgruppe (36) und mindestens eine Vorrichtung (49, 50, 51) der zweiten Vorrichtungsgruppe (48) aufweisen.

2. Transporteinheit (28, 74, 76, 78) gemäß Anspruch 1, dadurch charakterisiert, dass der erste Fahrzeug-Bus (34) und die erste Vorrichtungsgruppe (36) ebenso wie der zweite Fahrzeug-Bus (46) und die zweite Vorrichtungsgruppe (48) in allen Fahrzeugen (4, 6, 8, 10, 12, 14, 80, 82) der Transporteinheit (28, 74, 76, 78) verteilt sind.

3. Transporteinheit (28, 74, 76, 78) gemäß einem der Ansprüche 1 und 2, dadurch charakterisiert, dass die Netzwerkanordnung (29) ein drittes Gateway (56), einen dritten Fahrzeug-Bus (58), der mit dem Zug-Bus (29A) über das dritte Gateway (56) verbunden ist, und eine dritte Gruppe von Vorrichtungen (60) aufweist, die Vorrichtungen (62, 64) aufweist, die nur mit dem dritten Fahrzeug-Bus (58) verbunden sind, und dadurch, dass die dritte Gruppe von Vorrichtungen (60) nur Vorrichtungen (62, 64) aufweist, die zum Leiten der Kommunikation, der Anzeige, der Eisenbahnsignalisierung, der Diagnose und der Fahrsteuerung der Transporteinheit (28, 74, 76, 78) geeignet sind.

4. Transporteinheit (28, 74, 76, 78) gemäß einem der Ansprüche 1 bis 3, dadurch charakterisiert, dass die Vorrichtungen, die zu jeder Gruppe von Vorrichtungen gehören, dazu beitragen, eine Funktion unter den Funktionen des Komforts, des Antriebs/Bremsens und der Fahrsteuerung der Transporteinheit (26, 74, 76, 78) zu realisieren.

5. Transporteinheit (26, 74, 76, 78) gemäß einem der Ansprüche 1 bis 4, dadurch charakterisiert, dass die erste Gruppe von Vorrichtungen (36) nur Vorrichtungen (38, 40, 41) aufweist, die zum Leiten und Realisieren von Aktivitäten, die den Komfort der Passagiere betreffen, geeignet sind.

6. Transporteinheit (26, 74, 76, 78) gemäß einem der Ansprüche 1 bis 5, dadurch charakterisiert, dass die erste Gruppe von Vorrichtungen (36) aus mindestens einer Vorrichtung besteht von einem Leitrechner (41), einer Türsteuervorrichtung (40), einer Beleuchtungsvorrichtung (38), einer Lautsprechervorrichtung, einer Heiz-Klimatisierungs-Vorrichtung, einer Vorrichtung zum Verteilen von Informationen an Passagiere, einer Vorrichtung zur Diagnose des Komforts und einer sanitären Anlage.

7. Transporteinheit (26, 74, 76, 78) gemäß einem der Ansprüche 1 bis 6, dadurch charakterisiert, dass die zweite Gruppe von Vorrichtungen (48) nur Vorrichtungen (49, 50, 51) aufweist, die zum Leiten und Realisieren des Antriebs und des Bremsens der Transporteinheit geeignet sind.

8. Transporteinheit (26, 74, 76, 78) gemäß einem der Ansprüche 1 bis 7, dadurch charakterisiert, dass die zweite Gruppe von Vorrichtungen (48) mindestens aus einer Vorrichtung besteht von einem Leitrechner (51), einer elektronischen Einheit zum Steuern einer Antriebsvorrichtung (50), einer elektronischen Einheit zum Steuern eines Hilfs-Wechselrichters (49), einer elektronischen Einheit zum Steuern der Vorrichtungen zur Hochspannungsverteilung, einer elektronischen Einheit zum Steuern eines Batterieladers, einer elektronischen Einheit zum Steuern einer Vorrichtung zum Erzeugen von komprimierter Luft, einer elektronischen Einheit zum Steuern einer Einheit zum Antrieb/Bremsen, einer elektronischen Einheit zum Anti-Gleit-Steuern, einer elektronischen Einheit zum Steuern einer Einheit zum Brand-Detektieren und Brand-Löschen, einer elektronischen Einheit zum Detektieren einer Drehgestell-Instabilität und einer elektronische Einheit zur Heißläuferdetektion.

9. Transporteinheit (26, 74, 76, 78) gemäß einem der Ansprüche 1 bis 6, dadurch charakterisiert, dass jede Gruppe von Vorrichtungen (36, 48, 60) einen Leitrechner (41, 51, 62) des Fahrzeugbusses (34, 46, 58) aufweist, mit dem sie verbunden ist, wobei der Leitrechner (41, 51, 62) dazu geeignet ist, die anderen Vorrichtungen (38, 40, 49, 50, 64) der Gruppe von Vorrichtungen (36, 48, 60) zu leiten und zu steuern, wobei jeder Leitrechner (41, 51, 62) Daten von den anderen Vorrichtungen (38, 40, 49, 50, 64) empfängt und geeignet ist, Synthesedaten, die für die Funktion aller anderen Vorrichtungen (38, 40, 49, 50, 64) der Gruppe von Vorrichtungen (36, 48, 60) sind, an den Zug-Bus (29A) zu senden, wobei die Synthesedaten auf eine vorgegebene Anzahl von Bits codiert sind, ganz gleich was die Anzahl und der Typ der Vorrichtungen (38, 40, 49, 50, 64) der Gruppe von Vorrichtungen (36, 48, 60) sind, wobei die Anzahl der von dem Leitrechner (41, 51, 62) gesendeten Daten kleiner ist als die von dem Leitrechner (41, 51, 62) vonseiten der anderen Vorrichtungen (38, 40, 49, 50, 64) empfangenen Daten.

10. Transporteinheit (26, 74, 76, 78) gemäß Anspruch 4 kombiniert mit Anspruch 9, dadurch charakterisiert, dass die Leitvorrichtung (62) der dritten Gruppe von Vorrichtungen (60) geeignet ist, das Fahren der Transporteinheit (28, 74, 76, 78) zu steuern und dadurch, dass die Leitvorrichtung (62) der dritten Gruppe von Vorrichtungen (60) geeignet ist, die Leitvorrichtung (41, 51) der ersten (36) und/oder der zweiten (48) Gruppe von Vorrichtungen zu steuern.

11. Transporteinheit (26, 74, 76, 78) gemäß einem der Ansprüche 9 und 10, dadurch charakterisiert, dass jedes Gateway (32, 45, 56) des Zug-Busses (29A) mindestens eine Konfigurationstabelle (42, 45A, 66A, 66B) aufweist, die die Umwandlung des Formats der Daten von jedem Bus des Fahrzeugs (34, 46, 58) zu dem Zug-Bus (29A) und umgekehrt sicherstellt, und dadurch, dass die oder jede Leitvorrichtung (41, 51, 62) einer Gruppe von Vorrichtungen (36, 48, 60) Mittel zum Empfangen (44, 52B, 70) eines neuen Berechnungsprogramms von der Art aufweist, dass bei dem Hinzufügen oder dem Ersatz einer Vorrichtung (38, 40, 49, 50, 62) durch eine neue Vorrichtung in der Gruppe von Vorrichtungen (36, 48, 60) oder bei der Implementierung einer neuen Steuerregel einer Vorrichtung, die oder jede Leitvorrichtung (41, 51, 62) dazu geeignet ist, umprogrammiert zu werden, ohne die Konfigurationstabellen (42, 45A, 66A, 66B) des Gateways (32, 34, 56), mit dem die neue Vorrichtung verbunden ist, zu modifizieren.

12. Transporteinheit (26, 74, 76, 78) gemäß einem der Ansprüche 9 bis 11, dadurch charakterisiert, dass die oder jede Leitvorrichtung (41, 51, 62) geeignet ist, in einem periodischen Übertragungskanal nur Daten zur Signalisierung der Existenz und der Natur eines Defekts zu Übertragen.

## Claims

1. A transport unit (28, 74, 76, 78) comprising:
· at least one passenger transport vehicle (6, 8, 10, 12) and at least one driver vehicle (4, 14, 80, 82) attached to the passenger vehicle (6, 8, 10, 12) and forming a self-contained vehicle set provided with on-board propulsion equipment (50); and
· a set of networks (29) conveying traffic in real time, the set of networks (29) comprising a train bus (29A), first (32) and second (45) gateways, first (34) and second (46) vehicle buses each connected to the train bus (29A) via the first (32) and second (45) gateways respectively, and first (36) and second (48) on-board equipment groups comprising pieces of equipment (38, 40, 41 ; 49, 50, 51) connected solely to the first (32) and second (45) gateways respectively via the first (34) and second (46) vehicle buses respectively;
**characterized in that** at least two vehicles (4, 6, 8, 10, 12, 14, 80, 82) each include at least one piece of equipment (38, 40, 41) of the first equipment group (36) and one piece of equipment (49, 50, 51) of the second equipment group (48).

2. A transport unit (28, 74, 76, 78) according to claim 1, **characterized in that** the first vehicle bus (34) and the first equipment group (36) and also the second vehicle bus (46) and the second equipment group (48) are distributed amongst all of the vehicles (4, 6, 8, 10, 12, 14, 80, 82) of said transport unit (28, 74, 76, 78).

3. A transport unit (28, 74, 76, 78) according to anyone of claims 1 and 2, **characterized in that** the set of networks (29) includes a third gateway (56), a third vehicle bus (58) connected to the train bus (29A) by the third gateway (56), and a third equipment group (60) comprising pieces of equipment (62, 64) connected solely to the third vehicle bus (58), and wherein the third equipment group (60) comprises only pieces of equipment (62, 64) suitable for managing communications, display, railway signaling, diagnosis, and driving control of the transport unit (28, 74, 76, 78).

4. A transport unit (28, 74, 76, 78) according to anyone of claims 1 to 3, **characterized in that** the pieces of equipment belonging to each equipment group contribute to performing a function selected from the following functions: comfort; propulsion/braking; and controlling driving of the transport unit (28, 74, 76, 78).

5. A transport unit (28, 74, 76, 78) according to anyone of claims 1 to 4, **characterized in that** said first equipment group (36) comprises only pieces of equipment (38, 40, 41) suitable for managing and carrying out activities associated with passenger comfort.

6. A transport unit (28, 74, 76, 78) according to anyone of claims 1 to 5, **characterized in that** said first equipment group (36) consists in at least one piece of equipment selected from: a master computer (41); door control equipment (40); lighting equipment (38); public announcement equipment; heater and air conditioning equipment; equipment for delivering information to passengers; equipment for diagnosing comfort; and a washroom installation.

7. A transport unit (28, 74, 76, 78) according to anyone of claims 1 to 6, **characterized in that** said second equipment group (48) comprises only pieces of equipment (49, 50, 51) suitable for managing and carrying out propulsion and braking of the transport unit.

8. A transport unit (28, 74, 76, 78) according to anyone of claims 1 to 7, **characterized in that** said second equipment group (48) consists in at least one piece of equipment selected from: a master computer (51); an electronic control unit for controlling propulsion equipment (50); an electronic control unit for controlling an auxiliary inverter (49); an electronic control unit for controlling high voltage distribution equipment; an electronic control unit for controlling a battery charger; an electronic control unit for controlling a compressed air production device; an electronic control unit for controlling traction/braking equipment; an electronic control unit anti-sliding; an electronic control unit for controlling a unit for detecting and extinguishing fire; an electronic unit for detecting bogie instability; and an electronic unit for detecting a hot axle bearing.

9. A transport unit (28, 74, 76, 78) according to anyone of claims 1 to 6, **characterized in that** each equipment group (36, 48, 60) comprises a master computer (41, 51, 62) for controlling the vehicle bus (34, 46, 58) to which it is connected, the master computer (41, 51, 62) being suitable for managing and controlling the other pieces of equipment (38, 40, 49, 50, 64) of the equipment group (36, 48, 60), each master computer (41, 51, 62) receiving data from the other pieces of equipment (38, 40, 49, 50, 64) and being suitable for delivering synthesis data to the train bus (29A) representative of the operation of all of the other pieces of equipment (38, 40, 49, 50, 64) of the equipment group (36, 48, 60), the synthesis data being encoded on a predefined number of bits regardless of the number and the type of pieces of equipment (38, 40, 49, 50, 64) in the equipment group (36, 48, 60), the amount of data delivered by the master computer (41, 51, 62) being less than the amount of data received by the master computer (41, 51, 62) from the other pieces of equipment (38, 40, 49, 50, 64).

10. A transport unit (28, 74, 76, 78) according to claim 4 combined with claim 9, **characterized in that** the master piece of equipment (62) of the third equipment group (60) is suitable for managing the control of the transport unit (28, 74, 76, 78), and **in that** said master piece of equipment (62) of the third equipment group (60) is suitable for controlling the master piece of equipment (41, 51) of the first (36) and/or second (48) equipment groups.

11. A transport unit (28, 74, 76, 78) according to anyone of claims 9 and 10, **characterized in that** each gateway (32, 45, 56) of the train bus (29A) includes at least one configuration table (42, 45A, 66A, 66B) for converting the data format of each vehicle bus (34, 46, 58) to the data format of the train bus (29A) and vice versa, and **in that** the or each master piece of equipment (41, 51, 62) of an equipment group (36, 48, 60) includes receiver means (44, 52B, 70) for receiving a new computer program such that in the event of a piece of equipment (38, 40, 49, 50, 62, 64) being added or replaced with a new piece of equipment in said equipment group (36, 48, 60) or in the event of a new control relationship being implemented for a piece of equipment, the or each master piece of equipment (41, 51, 62) is suitable for being reprogrammed without modifying the configuration tables (42, 45A, 66A, 66B) of the gateway (32, 45, 56) to which the new piece of equipment is connected.

12. A transport unit (28, 74, 76, 78) according to anyone of claims 9 to 11, **characterized in that** the or each master piece of equipment (41, 51, 62) is suitable for delivering over a periodic transmission channel only data that signals existence and the sort of a fault.
